# EUROPÄISCHE PATENTANMELDUNG

(11) **EP 1 091 604 A2**
(43) Veröffentlichungstag der Anmeldung: **11.04.2001**
(21) Anmeldenummer: 00120877.6
(22) Anmeldetag: 25.09.2000
(51) Int. Cl.: H04Q 7/32

(54) **Verfahren zum Betrieb eines Kommunikationsendgerätes**

(30) Priorität: 30.09.1999 DE 19947077
(71) Anmelder: SIEMENS AKTIENGESELLSCHAFT, 80333 München (DE)
(72) Erfinder: Reimer, Uve, 12683 Berlin (DE); Rüssmann, Michael, 81737 München (DE); Niepel, Alexander, 80337 München (DE)

(57) **Zusammenfassung**

Aufgabe der Erfindung ist es, einem Teilnehmer-Identifikations-Modul flexibel mehrere Teilnehmerprofile zuordnen zu können.
Der Teilnehmer hat ein Teilnehmer-Identifikations-Modul (SIM) in seinem Endgerät. Diesem ist weiterhin eine Teilnehmer-Identifikationsnummer (IMSI) zugeordnet. Der IMSI jedoch können zwei oder mehr Rufnummern zugeordnet sein, die sich durch unterschiedliche dazugehörige Teilnehmerprofile auszeichnen.
Diese Teilnehmerprofile sind in geeigneter Weise im Netz verfügbar und administrierbar.
In Abhängigkeit von dem aktuellen Status des Profils (aktiviert/deaktiviert) wird ein ankommender Ruf durchgeschaltet oder z. B. auf eine sogenannte 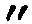 VoiceMailBox", also einen Anrufbeantworter umgeleitet.

## Beschreibung

### Fachgebiet der Erfindung

Die Erfindung betrifft ein Verfahren zum Betreiben eines Kommunikationsendgerätes in einem Kommunikationsnetz, insbesondere eines Mobilfunktelefons in einem Mobilfunknetz.
Diese Kommunikationsendgeräte sind durch eine Teilnehmer-Identifikations-Nummer (bei GSM beispielsweise die sogenannte IMSI) identifizierbar. Diese ist üblicherweise in einem Teilnehmer-Identifikations-Modul (das sogenannte SIM) gespeichert.
Diese Identifikations-Nummer ist mit einem Teilnehmerprofil im Teilnehmerverzeichnis (z. B. Home Location Register HLR) verknüpft. Pro Teilnehmer wird eine Rufnummer vergeben und eine Abrechnung erstellt.
Eine Trennung verschiedener Nutzungsarten (z. B. dienstlich und privat) ist nicht möglich.

### Stand der Technik

Inzwischen besitzen viele Telekommunikationsnutzer mehrere Mobilfunkgeräte, eines für den privaten Gebrauch und ein dienstliches beispielsweise. Denn um separate Rufnummern, Abrechnungen, Dienstberechtigungen etc. zu realisieren, müssen gegenwärtig zwei Teilnehmer-Identifikations-Module (SIM) gekauft werden. Das Auswechseln der Module in einem Endgerät ist unpraktisch, zudem wäre der Benutzer immer nur unter einer der Rufnummern erreichbar.

In DE 43 17 143 C2 wird ein Verfahren beschrieben, bei dem einem Teilnehmer zwei oder mehr Teilnehmer-Identifikations-Module zugeordnet sind. Die zugehörigen Einträge in einer Datenbank (beispielsweise dem HLR bei GSM) sind miteinander verknüpft, der jeweilige zum gerade benutzten Teilnehmer-Identifikations-Moduls gehörende Datensatz ist aktiviert. Die weiteren, verknüpften Datensätze können, müssen aber nicht aktiviert sein. Es ist möglich, eine Rufumleitung zu schalten - zu der aktivierten Nummer oder zu einem 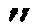 Briefkasten" (Voice-Mail-Box). Dabei wird ein Datenfeld im HLR für die Anrufweiterleitung 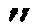 zweckentfremdet" verwendet.

In der Druckschrift GSM 02.97 (SMG version only, not for publication) wird ebenfalls ein Dienst mit der Bezeichnung 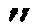 Multiple Subscriber Profile" beschrieben. Die Realisierung, d. h. Speicherung, Steuerung und Verwaltung erfolgt ebenfalls über das HLR.

Aufgabe der Erfindung ist es, einem Teilnehmer-Identifikations-Modul flexibel mehrere Teilnehmerprofile zuordnen zu können. Eine einfache und komfortable Administration der Teilnehmerprofile soll dabei möglich sein.

### Darstellung der Erfindung

Diese Aufgabe wird gelöst durch ein Verfahren gemäß Patentanspruch 1.

Der Teilnehmer hat dabei ein Teilnehmer-Identifikations-Modul (SIM) in seinem Endgerät. Diesem ist weiterhin eine Teilnehmer-Identifikationsnummer (IMSI) zugeordnet. Der IMSI jedoch können zwei oder mehr Rufnummern zugeordnet sein, die sich durch unterschiedliche dazugehörige Teilnehmerprofile auszeichnen. Diese Teilnehmerprofile sind in geeigneter Weise im Netz verfügbar und administrierbar, beispielsweise wie bislang üblich zugreifbar über das HLR. Welches der Profile bei einem Anruf benutzt wird, entscheidet eine Dienstelogik, welche sich im Kommunikationsnetz befindet.

Das erfindungsgemäße Vorgehen hat den Vorteil, daß ein Teilnehmer beispielsweise für die private und die dienstliche Benutzung nicht mehr zwei verschiedenen Endgeräte mit sich führen muß. Es ist dann möglich, getrennte Rufkategorien zu administrieren, eine getrennte Abrechnung durchzuführen und getrennt Dienste, wie z. B. eine zeitabhängige Anrufumleitung zur Verfügung zu stellen.
Ein besonderer Vorteil gegenüber den bisher bekannten Realisierungen ist die sogenannte 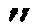 Online-Gebührenabrechnung", was bedeutet, daß beispielsweise bestimmte Rufgruppen (wie private Gespräche) gesondert vorab (Prepaid) vergebührt werden können.

Vorteilhafte Ausgestaltungen und Weiterbildungen sind in den Unteransprüchen angegeben.

Bei Verwendung der Profile wird weiterhin zwischen ankommenden und abgehenden Rufen unterschieden.
- Die Art des ankommenden Rufes (MTC) ist zu erkennen an der ursprünglich gewählten Nummer, also an der MSISDN, die im Teilnehmerverzeichnis angesprochen wird. Dadurch ist das auszuwählende Teilnehmerprofil festgelegt.
   Es sind aber noch andere Möglichkeiten denkbar, insbesondere wenn der Anruf nicht von einem zweiten Mobiltelefon ausgelöst wird sondern durch ein anderes Endgerät, beispielsweise ein PC oder ein zweites Transportnetz verwendet wird.
- Bei abgehenden Rufen (MOC) entscheidet der Nutzer mit der Wahlprozedur, beispielsweise mit einem Sonderzeichen wie 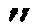 *" oder 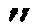 #" am Anfang oder Ende der gewählten Nummer, in welche Kategorie der aktuelle Ruf fällt.

Die einzelnen Teilnehmerprofile werden wie bisher über das Kommunikationsnetz administriert. Dies ist auf sehr komfortablen Weise etwa Webbasiert per HTML oder WAP-Webseiten möglich.

Aktiviert und deaktiviert können die Teilnehmerprofile ebenfalls auf diese Weise, oder auch unmittelbar über das Endgerät werden.

In Abhängigkeit von dem aktuellen Status des Profils (aktiviert/deaktiviert) wird ein ankommender Ruf durchgeschaltet oder z. B. auf eine sogenannte 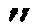 VoiceMailBox", also einen Anrufbeantworter umgeleitet. Die Umleitung kann außer durch den Aktivierungszustand des betreffenden Profils auch über Zeitangaben gesteuert werden.
So kann ein dienstlich genutztes Teilnehmerprofil beispielsweise nur Wochentags von 8 bis 18 Uhr aktiviert sein, alle außerhalb dieser Zeit für diese Rufnummer eintreffenden Rufe werden an den Anrufbeantworter oder beispielsweise eine andere Nummer (,Hotline') weitergeleitet.

Eingehende Anrufe können in einer Ausgestaltungsform der Erfindung durch die Signalisierung zum Teilnehmer unterschieden werden, beispielsweise durch verschiedenartige Symbole, die auf der Anzeige des Mobiltelefons aufzeigen, , ob es sich um ein 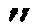 dienstliches" oder ein 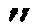 privates" Gespräch handelt. Das Teilnehmerprofil kann auch, sofern dies von dem Endgerät unterstützt wird, ein spezifisches Rufsignal (Klingelton) für den jeweiligen eintreffenden Anruf enthalten, welches den Teilnehmer sofort darüber informiert, ob es sich um einen Ruf an seine private oder dienstliche Rufnummer handelt.

Abhängig von dem ausgewählten Teilnehmerprofil bei einem abgehenden Ruf wird beispielsweise das Vergebührungsmodell festgelegt und eine der Kategorie entsprechende Kontonummer in die Gebührendatensätze eingetragen.

In einer weiteren Ausgestaltungsform ist es denkbar, daß zu einem Zeitpunkt nur eines der Teilnehmerprofile aktiviert ist. Das bedeutet, sobald der Teilnehmer ein deaktiviertes Teilnehmerprofil aktiviert (sei es durch Benutzung oder durch eine konkrete Aktivierungs-Handlung), wird das bislang aktivierte Teilnehmerprofil deaktiviert.

In einer weiteren vorteilhaften Ausgestaltungsform enthält das Teilnehmerprofil Listen von zulässigen oder unzulässigen Nummern, den sogenannten
- ,White Lists':
   Ein Anruf ist nur von und/oder zu diesen Nummern zulässig. Kommt ein Anruf von einer anderen Nummer, so wird gemäß der Einstellungen im Teilnehmerprofil dieser Anruf zu einer Voicemailbox oder zu der anderen Rufnummer des Teilnehmers umgeleitet.
- ,Black Lists':
   kommt ein Anruf von einer der in dieser Liste enthaltenen Nummern und/oder versucht der Teilnehmer eine Nummer auf dieser Liste anzurufen, so wird dieses verhindert oder beispielsweise auf ein anderes Profil des Teilnehmers umgelenkt.

### Kurzbeschreibung der Zeichungen

Im folgenden wird die Erfindung anhand von Ausführungsbeispielen erläutert. Dabei zeigen
- Figur 1: einen beispielhaften Aufbau eines Kommunikationssystems mit Dienstezentrale realisiert mit der Technik der Intelligenten Netze nach ITU Q.1200 ff. zur Realisierung des Verfahrens, und
- Figur 2: ein beispielhaftes Teilnehmerverzeichnis HLR mit Verweis auf mehrere Teilnehmerprofile, welche mit einer SIM / IMSI verknüpft sind.

### Beschreibung der bevorzugten Ausgestaltungsformen

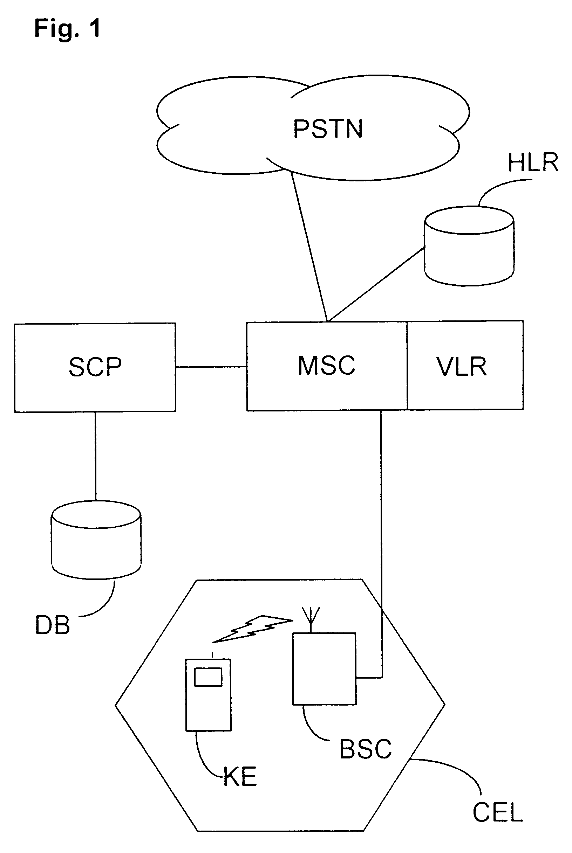

In der Figur 1 ist die Realisierung der erfindungsgemäßen Idee durch ein sogenanntes Intelligentes Netz dargestellt.

Dabei handelt es sich um eine Architektur, welche ergänzend zum existierenden Mobilfunk- oder Telefonnetz die Möglichkeit bietet, erweiterte Telekommunikationsdienste (Value Added Services) zu realisieren.
Eine Beschreibung des Intelligenten Netzes sowie der benötigten Komponenten findet sich in den ITU Normen Q.1200 ff.

Das Mobilfunknetz (in Europa beispielsweise GSM) ist aufgeteilt in sogenannte Funkzellen. Befindet sich ein mobiles Endgerät KE in einer solchen Funkzelle CEL, so wird über eine dieser Zelle zugehörige Funkstation, Basisstation BTS genannt, beieinem eintreffenden oder abgehenden Ruf eine Datenübertragung durchgeführt.
In dem Endgerät KE befindet sich, in der Figur 1 nicht dargestellt, die SIM-Karte, welche entnehmbar ist und welche die Teilnehmer-Identifikations-Nummer (IMSI) enthält, über die der Nutzer des Endgerätes eindeutig identifizierbar ist.

Die Basisstationen der einzelnen Funkzellen sind mit einer Zentralen Station MSC verbunden, über welche auch der Zugriff auf die Datenbanken Home Location Register HLR und Visitor Location Register VLR erfolgt.
Das HLR beinhaltet die Informationen über die Kunden des Kommunikationsnetzes, inklusive Teilnehmer-Identifikations-Nummern (IMSI), Rufnummer (MSISDN), statistische Basisdaten, subskribierte Dienste etc. Außerdem enthält sie den veränderlichen, aktuellen Aufenthaltsbereich, des Teilnehmers, der über die VLR Kennung angegeben wird.
Im Besucherregister VLR werden die Daten der Teilnehmer verwaltet, die sich aktuell in der VLR Area (entspricht i. d. R. der MSC Area) befinden. Hier ist der dynamische Teil der Teilnehmerinformationen abgelegt, wobei ein Teil der Informationen durch eine Kopie bestimmter Teilnehmerdaten aus dem HLR erstellt wird.

Die Dienstezentrale SCP, in welcher das erfindungsgemäße Teilnehmerprofil realisiert werden soll, enthält Funktionen und die IN Dienstprogramme, die zu den jeweiligen Dienstewünschen gehören. Neben allgemeinen Instruktionen zur Ablaufsteuerung umfaßt der SCP eine Bibliothek spezifischer Funktionen, die von Dienstprogrammen aufgerufen werden können.
Nach Übernahme des Dienstewunsches, also Rufaufbau (ankommend oder abgehend), wird das dem gewünschten Teilnehmerprofil zugeordnete Dienstprogramm ermittelt und ausgeführt. Dienstteilnehmer-individuelle Parameter beeinflussen die Ausführung des Dienstes.
Diese Parameter werden durch Anfrage bei einer sogenannten Service Data Function erhalten, beispielsweise aus einer separaten Datenbank DB. Die betroffenen Daten können aber auch aus dem bereits vorhandenen HLR ermittelt werden.

Die MSC stellt auch den Übergang in das Festnetz PSTN dar.

Das vorgeschlagene Vorgehen der Realisierung hat folgende Vorteile:
- eine Realisierung mit Hilfe von bereits vorhandenen Mechanismen (CAMEL, GSM 02.78) ist möglich
- es sind keine Änderungen in den existierenden Wirknetzkomponenten wie dem HLR notwendig
- Interworking mit allen anderen teilnehmerspezifischen Diensten wie dem Prepaid Dienst ist durch die zentralisierte Dienstelogik gegeben
- getrennte Abrechnungen für abgehende Rufe werden erstellt: das Postprocessing System erhält eine Anzeige (Operation FCI), im Call Record wird dies festgehalten,
- getrennte Klingeltöne können einfach realisiert werden: der eintreffende Ruf wird gefiltert und/oder umgeleitet, abhängig von der gewählten MSISDN und dem Aktivierungszustand des jeweiligen Teilnehmerprofiles. Mittels ,Alerting Pattern' wird ein spezifischer Klingelton zur Verfügung gestellt,
- ,Calling Number Identification Presentation': abhängig vom Charakter des abgehenden Rufes (also des ausgewählten Profils) wird die jeweils zugehörige Rufnummer mitgesendet (also die private oder die dienstliche).

Die Realisierung mittels CAMEL (Customized Applications for Mobile network Enhanced Logic) garantiert dabei ebenfalls, daß Roaming weiterhin problemlos möglich ist.

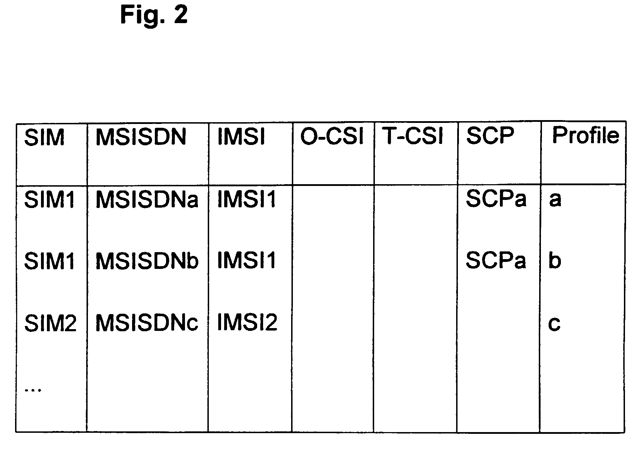

Figur 2 zeigt die dem Dienst zugehörigen Einträge in einer Teilnehmer-Datenbank, dem HLR.
Dabei sieht man, daß einer SIM Karte SIM1, mit zugehöriger Teilnehmer-Identifikationsnummer IMSI1, in der Datenbank in zwei Datensätzen zwei verschiedene Rufnummern MSISDNa und MSISDNb zugeordnet sind. Diesen wird jeweils ein eigenes Teilnehmerprofil für ankommende Rufe O-CSI: Profil a, Profil c, sowie für abgehende Rufe, T-CSI: Profil b, Profil d, zugeordnet (in CAMEL Terminologie: der sogenannte 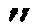 Service Key").
Weiterhin ist der Tabelle (dem HLR) zu entnehmen, wo sich diese Teilnehmerprofile befinden, d. h. die Adresse der Dienstezentrale SCPa, SCPb.
Abhängig von der angewählten Rufnummer MSISDN wird dann das jeweilige aktuelle Profil in der Dienstezentrale ausgewählt. Die Unterscheidung und Zuordnung der Rufnummer zu dem Profil erfolgt durch die Dienstelogik im SCP.
Dies ist im Vergleich zu einer rein HLR-basierten Lösung deutlich flexibler.

Hinter den Profilen a, b, c, d verbirgt sich eine definierbare Menge von Angaben, etwa Zeitangaben, eine Black List und/oder White List, Umleitungen und vieles andere mehr.
Die Unterscheidung zwischen ankommenden und abgehenden Rufen ist sinnvoll: beispielsweise kann für abgehende Rufe in dem Profil, Profil a, ein Prepaid Dienst vorgesehen sein, im zugehörigen Profil b für ankommende Rufe dagegen ein Screening, d. h. eine Überprüfung, ob dieser zum aktuellen Zeitpunkt zugelassen ist.

### Abkürzungsverzeichnis

- BTS: Base Tranceiver Station
- CEL: Funkzelle
- CSI: CAMEL Subscription Information
- DB: Datenbank
- GSM: Global System for Mobile Communication
- HLR: Home Location Register
- IMSI: International Mobile Subsriber Identity
- KE: Kommunikationsendgerät
- MSC: Mobile Services Switching Center
- MSISDN: Internationale Mobilteilnehmer-Rufnummer
- MOC: Mobile Originating Call
- MTC: Mobile Terminating Call
- O: Originating
- PSTN: Public Switched Telephone Network
- SCP: Service Control Point
- SIM: Subscriber Identification Module
- T: Terminating
- VLR: Visiting Location Register

### Literaturverzeichnis

GSM 02.97
Digital Cellular telecommunications system (Phase 2+);
Multiple Subscriber Profile (MSP), Service Description, Stage 1 (GSM 02.97 version 7.0.0 Release 1998)

## Patentansprüche

1. Verfahren zum Betrieb eines KommunikationsendgeräteS (KE) in einem Kommunikationsnetz, wobei
- dem Kommunikationsendgerät eine Teilnehmer-Identifikations-Nummer (IMSI) zugeordnet ist, und
- der Teilnehmer-Identifikationsnummer (IMSI) mindestens zwei Rufnummern (MSISDNa, MSISDNb) zugeordnet sind, und
- jeder Rufnummer (MSISDNa, MSISDNb) ein Teilnehmerprofil (a, b) zugeordnet ist, und
- eine Dienstelogik in dem Kommunikationsnetz entscheidet, welches Teilnehmerprofil bei einem Ruf zu oder von diesem Kommunikationsendgerät angewendet wird.

2. Verfahren nach Patentanspruch 1,
dadurch gekennzeichnet, daß
bei einem ankommenden Ruf durch die angewählte Rufnummer (MSISDN) der Dienstelogik angezeigt wird, welches Teilnehmerprofil zu verwenden ist.

3. Verfahren nach einem der vorigen Patentansprüche,
dadurch gekennzeichnet, daß
dem Teilnehmer bei einem ankommenden Ruf akustisch oder visuell angezeigt wird, an welche Rufnummer der Ruf gerichtet war.

4. Verfahren nach Patentanspruch 1,
dadurch gekennzeichnet, daß
bei einem abgehenden Ruf der Benutzer oder das Endgerät durch zusätzliche Signalisierung der Dienstelogik anzeigt, welches Teilnehmerprofil zu verwenden ist.

5. Verfahren nach einem der vorigen Patentansprüche,
dadurch gekennzeichnet, daß
ein Teilnehmerprofil durch den Benutzer über das Kommunikationsendgerät aktiviert und deaktiviert werden kann.

6. Verfahren nach einem der vorigen Patentansprüche,
dadurch gekennzeichnet, daß die
Teilnehmerprofile durch den Benutzer über ein Kommunikationsnetz administriert werden können.

7. Verfahren nach einem der vorigen Patentansprüche,
dadurch gekennzeichnet, daß
ein Teilnehmerprofil Vergebührungs-Angaben enthält.

8. Verfahren nach einem der vorigen Patentansprüche,
dadurch gekennzeichnet, daß
ein Teilnehmerprofil Zeit-Angaben enthält, welche über die Aktivierung und/oder Deaktivierung der Rufnummern (MSISDNa, MSISDNb) entscheiden.

9. Verfahren nach einem der vorigen Patentansprüche,
dadurch gekennzeichnet, daß
ein Teilnehmerprofil Angaben enthält, mit welchen Kommunikationspartnern ein Verbindungsaufbau zulässig ist oder mit welchen Kommunikationspartnern ein Verbindungsaufbau unzulässig ist.

10. Verfahren nach einem der vorigen Patentansprüche,
dadurch gekennzeichnet, daß
zu einem Zeitpunkt für eine Teilnehmer-Identifikationsnummer nur eine Rufnummer (MSISDNa, MSISDNb) mit zugehörigen Profil aktiviert ist.

11. Verfahren nach einem der vorigen Patentansprüche,
dadurch gekennzeichnet, daß
Rufe für nicht-aktivierte Rufnummern in einem systemeigenen Briefkasten gesammelt werden.

12. Verfahren nach einem der vorigen Patentansprüche,
dadurch gekennzeichnet, daß
es sich bei dem Kommunikationsnetz um ein Mobilfunknetz handelt.
